# FASCICULE DE BREVET EUROPEEN

(11) **EP 2 406 463 B1**
(45) Date de publication et mention de la délivrance du brevet: **08.05.2013**
(21) Numéro de dépôt: 10707931.1
(22) Date de dépôt: 12.03.2010
(51) Int. Cl.: F01D 5/14, F01D 5/18, F01D 9/02

(54) **AUBE DE TURBINE AVEC UN TROU DE DEPOUSSIÉRAGE EN BASE DE PALE.**
TURBINENSCHAUFEL MIT ENTSTAUBUNGSLOCH AM SCHAUFELFUSS
TURBINE VANE WITH DUSTING HOLE AT THE BASE OF THE BLADE

(30) Priorité: 13.03.2009 FR 0951615; 26.06.2009 FR 0954375
(43) Date de publication de la demande: 18.01.2012
(73) Titulaire: Snecma, 75015 Paris (FR)
(72) Inventeur: ANTUNES, Serge, Louis, F-77380 Combs La Ville (FR); BOURY, Jacques, Auguste, Amédée, F-17420 Saint Palais sur Mer (FR); ROSSET, Patrice, Jean-Marc, F-77720 La Chappelle Gauthier (FR)
(74) Mandataire: Gevers France
(86) Numéro de dépôt international: PCT/EP2010/053212
(87) Numéro de publication internationale: WO 2010/103113

(56) Documents cités:
- EP-A- 1 178 181
- EP-A- 1 688 587
- EP-A- 1 772 592
- US-A- 6 164 913
- US-A1- 2007 020 100

## Description

Le domaine de la présente invention est celui des turbomachines et en particulier celui des aubes de turbine refroidies pour ces turbomachine comme en EP1 688 587.

Les turbomachines modernes sont classiquement réalisées sous la forme d'un assemblage de modules. Elles comprennent tout d'abord un ou plusieurs modules de compresseur disposés en série, qui compriment de l'air aspiré dans une entrée d'air. L'air est ensuite introduit dans une chambre de combustion où il est mélangé à un carburant et brûlé. Les gaz de combustion passent à travers un ou plusieurs modules de turbine qui entraînent le ou les compresseurs. Les gaz sont enfin éjectés soit dans une tuyère pour produire une force de propulsion soit sur une turbine libre pour produire de la puissance qui est récupérée sur un arbre de transmission.

Ces turbomachines modernes, du fait des températures élevées des gaz en sortie de la chambre de combustion, sont refroidies, c'est-à-dire qu'un circuit de ventilation par de l'air frais est mis en place pour refroidir le métal des aubes de turbine lorsque la turbomachine est en fonctionnement. L'air de ventilation est prélevé en sortie d'un des étages de compresseur et amené sur la turbine. L'air pénètre généralement par le pied des aubes, traverse celles-ci par des cavités creusées dans l'épaisseur de la pale et est rejeté par des perforations pratiquées dans la paroi ou sur la tête des aubes. Les cavités sont ménagées longitudinalement à l'intérieur des aubes, en s'étendant entre le pied et la tête de l'aube, pour faire passer cet air et refroidir le métal. Généralement plusieurs cavités sont positionnées les unes à côté des autres, le long de la corde de l'aube, de façon à équilibrer les débits et à refroidir le métal de façon homogène.

En même temps que l'air nécessaire au fonctionnement du moteur, des poussières diverses (en particulier du sable fm) peuvent être aspirées dans la manche d'entrée. Si la plupart des poussières traversent le moteur sans dommage, il arrive que certaines d'entre elles parviennent jusqu'aux circuits de refroidissement des aubes de turbine ; leur accumulation à l'intérieur de ces circuits risque de boucher les orifices d'évacuation en sortie des cavités et ainsi de mettre en péril l'intégrité de l'aube. Pour empêcher ce phénomène, les aubes de turbine sont équipées, en plus des perçages et des évents de refroidissement, de trous de dépoussiérage calibrés, situés en sommet des cavités, dont le rôle est de garantir l'évacuation des poussières.

Des trous de dépoussiérage sont mis en place pour chacune des cavités. Le calibrage du trou est dicté par des critères de taille de poussière et est donc indépendant de la taille globale des aubes. L'implantation d'un trou de dépoussiérage dans le cas d'une aube de petite taille se révèle particulièrement difficile et peut devenir un critère déterminant dans le dimensionnement du circuit car il risque de conditionner la performance thermique du circuit de refroidissement.

Le problème à résoudre est particulièrement aigu dans le cas d'une aube de turbine haute pression (HP) dont la taille est très petite et dont la cavité qui refroidit le bord de fuite a une épaisseur très fine. Implanter le trou de dépoussiérage de la cavité du bord de fuite sur une aube à faible corde peut conduire à augmenter anormalement la taille de cette cavité, au détriment des autres. La cavité du bord de fuite peut dans ce cas représenter 25% de la corde totale alors qu'elle n'est habituellement que de 15 à 20% pour des aubes plus grandes. Cela signifie que pour les aubes de petite taille qui comportent ce type de trou de dépoussiérage, le refroidissement par la cavité du bord de fuite nécessitera plus d'air froid, au détriment du refroidissement par les autres cavités.

Il importe donc de pouvoir diminuer la section de la cavité de bord de fuite afin de réduire son débit de refroidissement et ainsi pouvoir maintenir une situation thermique globale satisfaisante. Le problème à résoudre pour atteindre cet objectif est de trouver un moyen d'évacuer les poussières de la cavité du bord de fuite, sans implanter un trou de dépoussiérage au sommet de l'aube.

La présente invention a pour but de remédier à ces inconvénients en proposant une aube de turbine qui ne présente pas certains des inconvénients de l'art antérieur et, en particulier, qui ne présente pas de trou de dépoussiérage pour la cavité de bord de fuite qui soit situé en sommet d'aube. Elle a également pour but d'optimiser l'utilisation de l'air de dépoussiérage, en le faisant participer au refroidissement de l'aube.

A cet effet, l'invention a pour objet une aube de turbine refroidie pour turbomachine comprenant une pale montée sur une plate-forme portée par un pied, ladite pale étant creusée d'une ou plusieurs cavités pour la circulation d'air de refroidissement, la cavité s'étendant le long du bord de fuite étant alimentée en air de refroidissement par un conduit d'alimentation reliant une entrée d'air située en partie basse du pied à la cavité de bord de fuite en faisant un coude au sein dudit pied, caractérisée en ce que le conduit comporte, sur un axe sensiblement radial par rapport à l'entrée d'air, une niche située sous la plate-forme ayant une forme en cloche, ladite niche débouchant à son sommet par un trou de dépoussiérage traversant ladite plate-forme et étant délimitée à l'intérieur du pied par des parois s'étendant sensiblement radialement à partir de la plate-forme pour la refermer latéralement.

La forme en cloche et le positionnement de la niche en face de l'entrée d'air sert de piège aux particules qui pourraient arriver avec l'air de refroidissement et qui pénétreraient dans le circuit de refroidissement du bord de fuite de l'aube. Elles sont ensuite évacuées au travers de la perforation, qui est calibrée en fonction de la taille prévisible de ces particules.

Dans un mode particulier de réalisation l'aube de turbine comporte en outre au moins une perforation de ventilation de la plate-forme alimentée par de l'air de refroidissement en provenance du conduit d'alimentation et le trou de dépoussiérage est confondu avec ladite perforation de ventilation de la plate-forme.

On réduit ainsi le nombre d'opérations pour la réalisation de l'aube.

Préférentiellement au moins une des parois de ladite niche s'étendant radialement à partir de la plate-forme est située dans le prolongement d'une des parois du conduit.

De façon encore plus préférentielle ladite niche est formée par les parois du conduit et par une arête positionnée en travers du sens d'écoulement de l'air de refroidissement dans ledit conduit.

Cette forme est particulièrement adaptée à une réalisation par fonderie de l'aube.

Dans une variante de réalisation de l'invention le trou de dépoussiérage se prolonge par un évidement pratiqué dans la face externe de la plateforme, ayant, en vue de dessus, une forme sensiblement triangulaire.

Cette disposition permet de faire participer l'air passant par le trou de dépoussiérage au refroidissement du raccordement de la plateforme à la pale.

De façon préférentielle l'évidement s'étend depuis un sommet placé sur le trou de dépoussiérage et s'évase en direction du raccordement de la plateforme à la pale.

Dans un mode particulier de réalisation de cette variante le côté du triangle opposé au trou de dépoussiérage a une longueur variant entre 1,5 et 3 fois le diamètre du trou de dépoussiérage.

Avantageusement les deux côtés s'étendant à partir du trou de dépoussiérage ont une longueur comprise entre 6 et 15 fois le diamètre dudit trou.

De façon préférentielle l'axe médian de l'évidement suit une direction sensiblement parallèle au bord de la plateforme qui est situé du côté du bord de fuite de l'aube.

De façon encore plus préférentielle l'évidement s'écarte au plus de 5° de la direction dudit bord de la plateforme.

Dans un mode particulier de réalisation l'évidement a, en sa partie médiane, sensiblement la forme d'un plan incliné qui s'enfonce dans l'épaisseur H de la plateforme en direction du trou de dépoussiérage sur une profondeur h, comprise entre 50 et 80% de la valeur H.

De façon préférentielle ledit plan incliné présente un angle d'inclinaison par rapport au plan de la plateforme compris entre 3 à 10°.

L'invention concerne également un module de turbine d'une turbomachine comprenant au moins une aube telle que définie ci-dessus ou une turbomachine comprenant un tel module de turbine

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue en perspective d'une aube de turbine HP;
- la figure 2 est une vue en perspective d'une aube de turbine HP montrant un trou de dépoussiérage de la cavité du bord de fuite positionné selon l'art antérieur ;
- la figure 3 est une vue en perspective d'une aube de turbine HP, selon l'art antérieur, avec une coupe réalisée au niveau de la cavité du bord de fuite ;
- la figure 4 est une vue en perspective d'une aube de turbine HP, montrant un trou de dépoussiérage selon un mode de réalisation de l'invention, avec une coupe réalisée au niveau de la cavité du bord de fuite ;
- la figure 5 est une vue en coupe de la cavité de bord de fuite d'une aube de turbine HP montrant un trou de dépoussiérage selon le même mode de réalisation de l'invention.
- la figure 6 est une vue de dessus d'une plateforme d'une aube de turbine montrant une variante d'un trou de dépoussiérage selon l'invention ;
- la figure 7 est une vue en coupe d'une plateforme d'une aube de turbine montrant la forme de l'orifice de sortie de la même variante d'un trou de dépoussiérage selon l'invention.

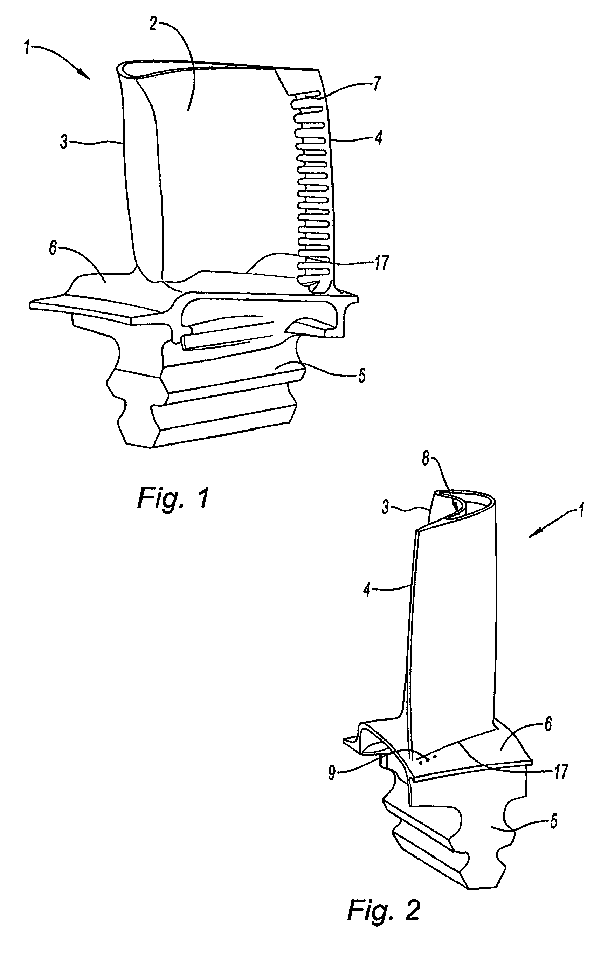

En se référant à la figure 1, on voit une aube de turbine HP 1 comportant une pale 2 s'étendant entre un bord d'attaque 3 et un bord de fuite 4, montée sur une plate-forme 6 portée par un pied d'aube 5 ; la plate-forme 6 est raccordée à la pale 2 par un rayon de raccordement 17 de forme arrondie. L'aube 1 comporte au niveau de son bord de fuite 4 des évents 7 destinés à évacuer l'air de refroidissement qui circule au sein de la cavité de bord de fuite. En se référant à la figure 2 on voit la position, dans l'art antérieur, d'une perforation 8 servant de trou de dépoussiérage à la cavité de bord de fuite ; le trou 8 est positionné sur la tête de l'aube au niveau de cette cavité. L'aube 1 comporte également des perforations 9 sur sa plate-forme 6, du côté de l'extrados de la pale 2, par lesquelles passe de l'air en provenance du pied de l'aube 5 et qui ont pour fonction de refroidir l'aube 1 au niveau de son raccordement 17 entre la pale 2 et la plate-forme 6. Les perforations 9 qui sont représentées sur la figure 2 sont positionnées au niveau du bord de fuite 4 et alimentées par un prélèvement d'air effectué sur le conduit d'alimentation en air frais de la cavité du bord de fuite.

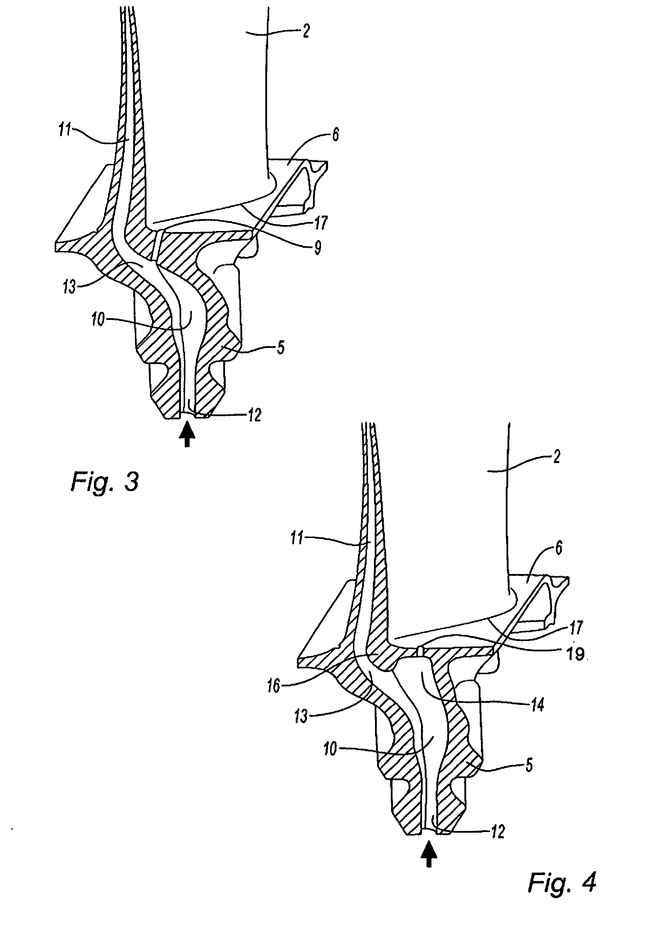

Les figures 3 et 4 montrent chacune une coupe d'une aube 1 de turbine au niveau du conduit 10 d'alimentation en air de refroidissement de sa cavité 11 de bord de fuite. Sur la figure 3, représentative de l'art antérieur, le conduit 10 circule depuis l'entrée d'air 12 située dans le pied 5 de l'aube jusqu'à son entrée dans la cavité 11 en conservant une section de passage qui est sensiblement constante, ou bien en lente diminution pour tenir compte des débits de refroidissement qui sont prélevés. Il présente de façon classique une forme avec un coude 13, du fait qu'il relie l'entrée d'air 12 qui est située dans le plan de symétrie du pied 5, à la cavité 11 du bord de fuite qui, elle, est décalée par rapport à ce plan à cause du profil curviligne de l'aube 1.

Sur la figure 4, selon l'invention, le conduit 10 s'évase du côté de l'extrados de l'aube 1 pour former une niche 14 positionnée sous la plate-forme 6, qui est alimentée par le conduit 10 et qui débouche dans la veine par une perforation 19 formant trou de dépoussiérage. Cette niche 14 est située sensiblement dans l'axe de l'entrée d'air 12 et se présente sous la forme d'une cavité en cloche dont le toit est formé par la paroi inférieure de la plate-forme 6, qui est centrée sur le trou de dépoussiérage 19 et qui présente des parois latérales retombant de part et d'autre du trou de dépoussiérage 19 pour la refermer latéralement. Le diamètre du trou de dépoussiérage 19 est calibré pour laisser passer les poussières susceptibles de parvenir jusque là.

La niche 14 est réalisée essentiellement par une déviation des parois du conduit 10 de refroidissement, qui s'éloignent d'avantage que dans l'art antérieur de l'extrados de la pale 2 pour former un espace sous la plate-forme 6, et par une arête 16, positionnée en travers du sens de circulation de l'air, pour refermer latéralement cet espace. Une telle configuration est en effet relativement aisée à produire par fonderie lors de la fabrication de l'aube.

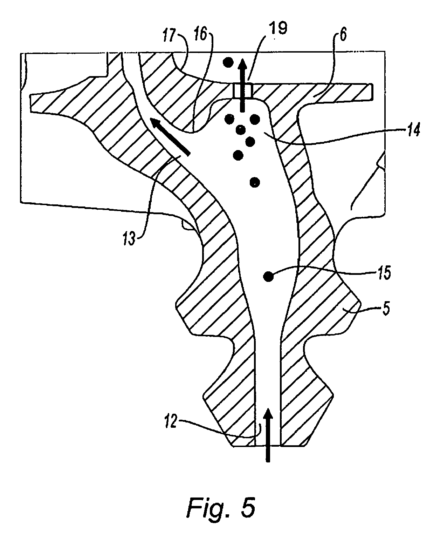

La figure 5 montre en coupe la circulation de l'air dans le conduit 10 et la voie que suivent des particules de poussières 15 qui pénétreraient dans le circuit de refroidissement du bord de fuite 4 de l'aube 1.

On constate sur les figures 3 et 4 que du fait de la création de la niche 14 sous la plateforme 6 et de son nécessaire alignement avec l'orifice d'entrée d'air 12, le trou de dépoussiérage 19 (fig. 4) se trouve situé à une distance plus grande du rayon de raccordement 17 que ne l'étaient les perforations de refroidissement 9 de l'art antérieur (fig. 3). Celles-ci débouchaient au point de raccordement de ce rayon 17 avec la plateforme 6 alors que le trou de dépoussiérage 19 en est quelque peu écarté. Il pourrait donc s'ensuivre, dans le cas d'une substitution des perforations 9 par le trou de dépoussiérage 19, un moins bon refroidissement de cette zone de raccordement.

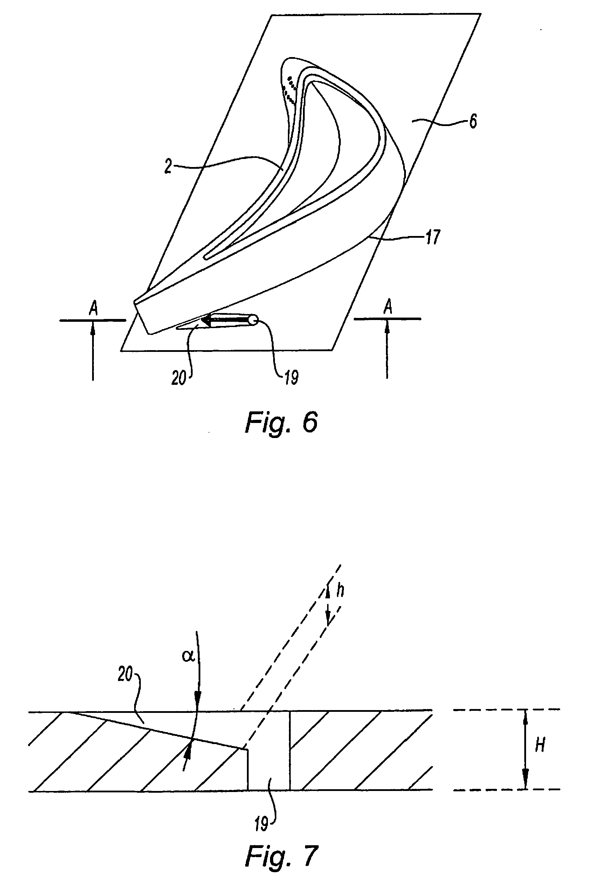

Pour remédier à cela et ne conserver qu'une seule perforation pour le refroidissement du raccordement 17, la figure 6 montre une variante pour la partie basse d'une aube 1, avec la plateforme 6 dans laquelle débouche le trou de dépoussiérage 19. Celui-ci se prolonge par un évidement 20, pratiqué dans l'épaisseur de la plateforme, du côté externe de celle-ci (c'est à dire du côté le plus éloigné de l'axe de rotation du moteur), qui a, en vue de dessus, une forme sensiblement triangulaire. Le triangle correspondant s'étend depuis un sommet placé sur le trou de dépoussiérage 19 et s'évase en direction du raccordement 17 de la plateforme 6 à la pale 2. Dans un mode préférentiel de réalisation le côté opposé au trou de dépoussiérage 19 a une longueur variant entre 1,5 et 3 fois le diamètre du trou de dépoussiérage 19, alors que les deux autres côtés ont une longueur comprise entre 6 et 15 fois ce même diamètre.

La figure 7 montre une vue en coupe de l'évidement 20 suivant une direction A-A, telle qu'illustrée sur la figure 6, sensiblement parallèle au bord de la plateforme qui est situé du côté du bord de fuite de l'aube. Le trou de dépoussiérage 19 traverse, comme indiqué précédemment, la plateforme 6 sur toute son épaisseur H et l'évidement 20 a, en sa partie médiane, la forme d'un plan incliné qui s'enfonce dans cette épaisseur H. Il rejoint le trou de dépoussiérage 19 à une profondeur h, comprise entre 50 et 80% de la valeur H et présente un angle d'inclinaison par rapport au plan de la plateforme qui peut varier de 3 à 10°. L'évidement 20 a, dans le sens transverse à la coupe A-A, une forme en U ou en V qui le raccorde au plan de la plateforme 6 le long des deux grands côtés du triangle.

L'axe médian du triangle constituant l'évidement 20 est situé dans le sens des lignes de courant de la veine de gaz et, pour cela, peut s'écarter de plus ou moins 5° de la direction du bord de la plateforme qui est située du côté du bord de fuite de l'aube.

On va maintenant décrire le refroidissement du bord de fuite 4 d'une aube 1 selon l'invention.

L'air de refroidissement arrive au niveau du pied 5 de l'aube 1 et pénètre par le conduit d'arrivée 12 dans le circuit d'alimentation de la cavité 11 pour le refroidissement du bord de fuite 4. A cet air sont mélangés des particules de poussières 15 qu'il convient d'éliminer pour éviter qu'elles n'obturent des orifices de refroidissement et ne viennent perturber le refroidissement de certaines parties de l'aube.

L'air pénètre par pression à l'intérieur de l'aube 1 et entraîne avec lui les particules 15. Celles-ci, du fait de la rotation des aubes et de la force centrifuge ainsi générée, se déplacent radialement dans le conduit de refroidissement 10 et se dirigent en direction de la niche 14, placée dans ce but en face de l'entrée d'air 12. A la différence de l'art antérieur elles n'empruntent pas le coude 13 du conduit 10 et restent temporairement en dessous de la plate-forme 6, piégées par les parois latérales de la niche 14. Elles s'accumulent en dessous du toit de cette niche et se trouvent ainsi placées en face de la perforation 19, qui fait office de trou de dépoussiérage. Les particules 15 sont alors entraînées par le flux d'air qui passe à travers le trou de dépoussiérage 19 et sont éjectées dans la veine de gaz du moteur.

Le dépoussiérage étant effectué au niveau de la perforation 19, il n'y a plus besoin de percer de trou en tête de la cavité 11 de l'aube 1 pour effectuer cette fonction ; on évite ainsi une opération de perçage qui était, comme indiqué précédemment, très difficile à réaliser dans l'art antérieur.

Dans la variante représentée sur les figures 6 et 7, l'air de refroidissement qui traverse le trou de dépoussiérage 19 est dévié en sortie, au niveau de la plateforme 6, par l'évidement 20 et prend une direction sensiblement parallèle à cette plateforme. Il est de plus plaqué contre la surface de la plateforme par les gaz circulant dans la veine du moteur qui l'entraînent vers le rayon de raccordement 17. L'air qui passe par le trou de dépoussiérage 19 et qui, de ce fait, est détourné du circuit de refroidissement de l'aube pour assurer cette fonction de dépoussiérage, reste ainsi utilisé pour refroidir cette aube, au niveau, cette fois-ci, de son pied.

Le diamètre du trou de dépoussiérage 19 étant supérieur à celui des perforations 9 de l'art antérieur puisqu'il est calibré pour laisser passer des particules de poussière, le débit d'air qui le traverse est supérieur à celui de refroidissement qui traversait les perforations 9. Du fait, d'une part de ce débit d'air plus important et, d'autre part, de la forme en triangle de l'évidement 20 l'air qui sort du trou de dépoussiérage 19 balaye une certaine longueur du rayon de raccordement 17. Son efficacité thermique est alors semblable à celle des trois perforations 9 de la plateforme que l'on trouve dans l'art antérieur et il est possible de supprimer ces trous. L'amélioration obtenue par cette variante est alors de deux types puisqu'on évite une opération de perçage des trois trous et que l'on peut globalement réduire le débit d'air de refroidissement qui passe par la cavité de bord de fuite. L'air de dépoussiérage assure en effet à la fois les fonctions assurées précédemment par le trou de dépoussiérage 8 et celles assurées par les perforations de refroidissement 9 du raccordement pale-plateforme 17.

Bien que l'invention ait été décrite en relation avec deux modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Aube de turbine refroidie pour turbomachine comprenant une pale (2) montée sur une plate-forme (6) portée par un pied (5), ladite pale étant creusée d'une ou plusieurs cavités pour la circulation d'air de refroidissement, la cavité (11) s'étendant le long du bord de fuite (4) étant alimentée en air de refroidissement par un conduit d'alimentation (10) reliant une entrée d'air (12) située en partie basse du pied (5) à la cavité (11) de bord de fuite en faisant un coude (13) au sein dudit pied, **caractérisée en ce que** le conduit (10) comporte, sur un axe sensiblement radial par rapport à l'entrée d'air (12), une niche (14) située sous la plate-forme (6) ayant une forme en cloche, ladite niche débouchant à son sommet par un trou de dépoussiérage (19) traversant ladite plate-forme et étant délimitée à l'intérieur du pied (5) par des parois s'étendant sensiblement radialement à partir de la plate-forme (6) pour la refermer latéralement.

2. Aube de turbine selon la revendication 1 comportant en outre au moins une perforation de ventilation (9) de la plate-forme (6) alimentée par de l'air de refroidissement en provenance du conduit d'alimentation (10) dans laquelle le trou de dépoussiérage (19) est confondu avec ladite perforation (9) de ventilation de la plate-forme (6).

3. Aube de turbine selon l'une des revendications 1 ou 2 dans laquelle au moins une des parois de ladite niche (14) s'étendant radialement à partir de la plate-forme (6) est située dans le prolongement d'une des parois du conduit (10).

4. Aube de turbine selon la revendication 3 dans laquelle ladite niche (14) est formée par les parois du conduit (10) et par une arête (16) positionnée en travers du sens d'écoulement de l'air de refroidissement dans ledit conduit.

5. Aube de turbine selon l'une des revendications 1 à 4 dans laquelle le trou de dépoussiérage (19) se prolonge par un évidement (20) pratiqué dans la face externe de la plateforme (6), ayant, en vue de dessus, une forme sensiblement triangulaire.

6. Aube de turbine selon la revendication 5 dans laquelle l'évidement (20) s'étend depuis un sommet placé sur le trou de dépoussiérage (19) et s'évase en direction du raccordement (17) de la plateforme (6) à la pale (2).

7. Aube de turbine selon la revendication 6 dans laquelle le côté du triangle opposé au trou de dépoussiérage (19) a une longueur variant entre 1,5 et 3 fois le diamètre du trou de dépoussiérage (19).

8. Aube de turbine selon l'une des revendications 6 ou 7 dans laquelle les deux côtés s'étendant à partir du trou de dépoussiérage (19) ont une longueur comprise entre 6 et 15 fois le diamètre dudit trou.

9. Aube de turbine selon l'une des revendications 5 à 8 dans laquelle l'axe médian de l'évidement (20) suit une direction sensiblement parallèle au bord de la plateforme (6) qui est situé du côté du bord de fuite (4) de l'aube (1).

10. Aube de turbine selon la revendication 9 dans laquelle l'axe médian de l'évidement (20) s'écarte au plus de 5° de la direction dudit bord de la plateforme (6).

11. Aube de turbine selon l'une des revendications 5 à 10 dans laquelle l'évidement (20) a, en sa partie médiane, sensiblement la forme d'un plan incliné qui s'enfonce dans l'épaisseur H de la plateforme (6) en direction du trou de dépoussiérage sur une profondeur h, comprise entre 50 et 80% de la valeur H.

12. Aube de turbine selon la revendication 11 dans laquelle ledit plan incliné présente un angle d'inclinaison par rapport au plan de la plateforme compris entre 3 à 10°.

13. Module de turbine d'une turbomachine comprenant au moins une aube (1) selon l'une des revendications 1 à 12.

14. Turbomachine comprenant un module de turbine selon la revendication précédente.

## Patentansprüche

1. Gekühlte Turbinenschaufel für eine Turbomaschine, ein Schaufelblatt (2) umfassend, das auf einer von einem Fuß (5) getragenen Plattform (6) angebracht ist, wobei das Schaufelblatt zur Kühlluftzirkulation durch einen Hohlraum oder mehrere Hohlräume durchbrochen ist, wobei der Hohlraum (11), der sich der Länge der Austrittskante (4) nach erstreckt, mit Kühlluft durch einen Versorgungskanal (10) versorgt wird, der einen im unteren Teil des Fußes (5) befindlichen Lufteinlass (12) mit dem Hohlraum (11) der Austrittskante unter Bildung einer Krümmung (13) im Inneren des Fußes verbindet,
**dadurch gekennzeichnet, dass** der Kanal (10) auf einer in Bezug auf den Lufteinlass (12) im Wesentlichen radialen Achse eine unter der Plattform (6) befindliche, über eine Glockenform verfügende Ausnehmung (14) aufweist, wobei die Ausnehmung an ihrem Scheitelpunkt in einer Entstaubungsöffnung (19) mündet, die durch die Plattform hindurchgeht und im Inneren des Fußes (5) durch Wände begrenzt ist, die sich ausgehend von der Plattform (6) im Wesentlichen radial erstrecken, um diese seitlich abzuschließen.

2. Turbinenschaufel nach Anspruch 1, darüber hinaus mindestens eine Lüftungsbohrung (9) für die Plattform (6) umfassend, die mit der Kühlluft aus dem Versorgungskanal (10) versorgt wird, wobei die Entstaubungsöffnung (19) und die Lüftungsbohrung (9) der Plattform (6) ineinander übergehen.

3. Turbinenschaufel nach einem der Ansprüche 1 oder 2, wobei sich mindestens eine der sich ausgehend von der Plattform (6) radial erstreckenden Wände der Ausnehmung (14) in der Verlängerung einer der Wände des Kanals (10) befindet.

4. Turbinenschaufel nach Anspruch 3, wobei die Ausnehmung (14) durch die Wände des Kanals (10) und durch einen Steg (16) gebildet ist, der quer zur Ausströmungsrichtung der Kühlluft in dem Kanal angeordnet ist.

5. Turbinenschaufel nach einem der Ansprüche 1 bis 4, wobei sich die Entstaubungsöffnung (19) in einer in der Außenfläche der Plattform (6) ausgebildeten Aussparung (20) fortsetzt, die von oben gesehen eine im Wesentlichen dreieckige Form hat.

6. Turbinenschaufel nach Anspruch 5, wobei sich die Aussparung (20) von einem auf der Entstaubungsöffnung (19) sitzenden Scheitelpunkt erstreckt und sich in Richtung auf den Anschluss (17) der Plattform (6) an der Schaufel (2) aufweitet.

7. Turbinenschaufel nach Anspruch 6, wobei der Schenkel des Dreiecks gegenüber der Entstaubungsöffnung (19) eine Länge hat, die zwischen dem 1,5- bis 3-fachen des Durchmessers der Entstaubungsöffnung (19) variiert.

8. Turbinenschaufel nach einem der Ansprüche 6 und 7, wobei die beiden Schenkel, die sich ausgehend von der Entstaubungsöffnung (19) erstrecken, eine Länge haben, die das 6- bis 15-fache des Durchmessers der Öffnung beträgt.

9. Turbinenschaufel nach einem der Ansprüche 5 bis 8, wobei die Mittelachse der Aussparung (20) einer zum Rand der Plattform (6) im Wesentlichen parallelen Richtung folgt, der sich auf der Seite der Austrittskante (4) der Schaufel (1) befindet.

10. Turbinenschaufel nach Anspruch 9, wobei die Mittelachse der Aussparung (20) um höchstens 5° von der Richtung des Rands der Plattform (6) abweicht.

11. Turbinenschaufel nach einem der Ansprüche 5 bis 10, wobei die Aussparung (20) in ihrem mittleren Abschnitt im Wesentlichen die Form einer schiefen Ebene hat, die in die Dicke H der Plattform (6) in Richtung auf die Entstaubungsöffnung über eine Tiefe h eindringt, die zwischen 50 und 80% des Werts H beträgt.

12. Turbinenschaufel nach Anspruch 11, wobei die schiefe Ebene in Bezug auf die Ebene der Plattform einen Neigungswinkel aufweist, der 3 bis 10° beträgt.

13. Turbinenmodul einer Turbomaschine, mindestens eine Schaufel (1) nach einem der Ansprüche 1 bis 12 umfassend.

14. Turbomaschine, ein Turbinenmodul nach dem vorhergehenden Anspruch umfassend.

## Claims

1. A cooled turbine vane for a turbomachine comprising a blade (2) mounted on a platform (6) supported by a root (5), said blade having one or more cavities cut into it for the circulation of cooling air, the cavity (11) extending along the trailing edge (4) being supplied with cooling air by a supply duct (10) connecting an air inlet (12) situated in the lower part of the root (5) to the trailing edge cavity (11), making a bend (13) within said root, **characterized in that** the duct (10) comprises, along an axis that is substantially radial with respect to the air inlet (12), a niche (14) situated under the platform (6) and in the shape of a bell, said niche opening at its top via a dusting hole (19) that passes through said platform and being delimited inside the root (5) by walls extending substantially radially from the platform (6) in order to close it laterally.

2. The turbine vane as claimed in claim 1, further comprising at least one ventilation perforation (9) for ventilating the platform (6), the perforation being supplied with cooling air from the supply duct (10), in which turbine vane the dusting hole (19) coincides with said ventilation perforation (9) of the platform (6).

3. The turbine vane as claimed in one of claims 1 and 2, in which at least one of the walls of said niche (14) extending radially from the platform (6) is situated in the continuation of one of the walls of the duct (10).

4. The turbine vane as claimed in claim 3 in which said niche (14) is formed by the walls of the duct (10) and by a ridge (16) positioned across the direction in which the cooling air flows in said duct.

5. The turbine vane as claimed in one of claims 1 to 4, in which the dusting hole (19) is extended by a recess (20) made in the external face of the platform (6) and having a substantially triangular shape when viewed from above.

6. The turbine vane as claimed in claim 5, in which the recess (20) extends from a vertex positioned on the dusting hole (19) and widens toward the connection (17) between the platform (6) and the blade (2).

7. The turbine vane as claimed in claim 6, in which the side of the triangle opposite the dusting hole (19) has a length varying between 1.5 and 3 times the diameter of the dusting hole (19).

8. The turbine vane as claimed in either of claims 6 and 7, in which the two sides extending from the dusting hole (19) have a length of between 6 and 15 times the diameter of said hole.

9. The turbine vane as claimed in one of claims 5 to 8, in which the median axis of the recess (20) runs in a direction substantially parallel to the edge of the platform (6) which is situated on the trailing edge (4) side of the vane (1).

10. The turbine vane as claimed in claim 9, in which the median axis of the recess (20) diverges from the direction of said edge of the platform (6) by 5° at most.

11. The turbine vane as claimed in one of claims 5 to 10, in which the recess (20) in its median part is substantially in the form of an inclined plane which sinks in the thickness H of the platform (6) in the direction of the dusting hole over a depth h of between 50 and 80% of the value of H.

12. The turbine vane as claimed in claim 1 l, in which said inclined plane is inclined by an angle of between 3 and 10° with respect to the plane of the platform.

13. A turbine module of a turbomachine comprising at least one vane (1) as claimed in one of claims 1 to 12.

14. A turbomachine comprising a turbine module as claimed in the preceding claim.
